(19)

Europäisches
Patentamt
European
Patent Office
Office européen
des brevets

(11) **EP 2 947 625 A1**

(12) **EUROPEAN PATENT APPLICATION**

(43) Date of publication:
**25.11.2015 Bulletin 2015/48**

(51) Int Cl.:
**G06T 7/00** (2006.01)  **G06T 7/20** (2006.01)
**G06K 9/00** (2006.01)

(21) Application number: **14305747.9**

(22) Date of filing: **20.05.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Boisson, Guillaume
  35576 Cesson-Sévigné (FR)**

• **Bureller, Olivier
  35576 Cesson-Sévigné (FR)**
• **Gendrot, Remy
  35576 Cesson-Sévigné (FR)**

(74) Representative: **Huchet, Anne
Technicolor
1, rue Jeanne d'Arc
92443 Issy-les-Moulineaux Cedex (FR)**

(54) **Method and apparatus for selection of reliable points for 3D modeling**

(57)    A method includes generating depth confidence maps and displacement confidence maps from dynamic image data including depth information, computing spatio-temporal reliability criteria for depth and displacement confidences, for pixels of a scene object in each of sequential frames of the dynamic image data, based on the depth confidence maps and the displacement confidence maps, and selecting a set of 3D points for forming a 3D model, having a spatio-temporal reliability criterion higher than a threshold for the spatio-temporal reliability criteria.

FIG.7

EP 2 947 625 A1

**Description**

FIELD

The present disclosure generally relates to a method and apparatus for selection of reliable points for 3D (3-Dimensional) modeling.

BACKGROUND

3D modeling is used in modeling of objects or scenes, for example. The modeling of objects or scenes may be used for facial capture or tracking, facial animation, and the like. When generating a dynamic 3D model based on a real-world object or scene that is captured by a camera, for example, the selection of dynamic mesh vertices from a set of 3D points determines the accuracy of the dynamic 3D model.

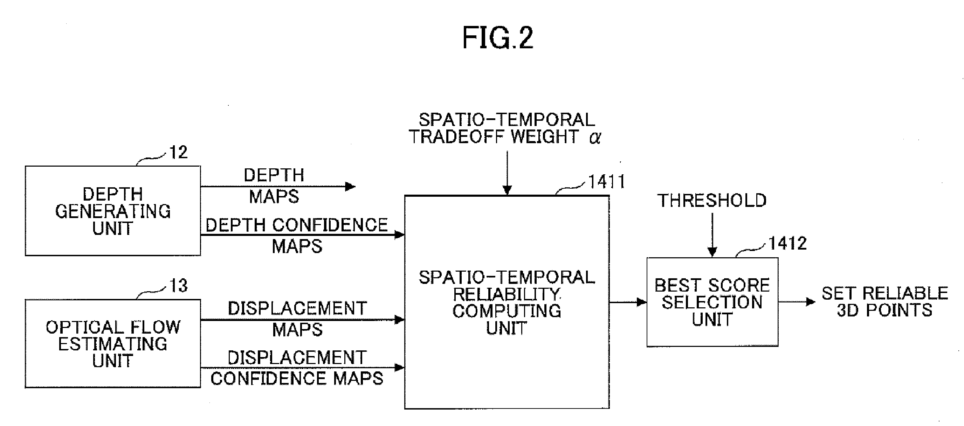

As an example, Levi Valgaerts et al., "Lightweight Binocular Facial Performance Capture under Uncontrolled Lighting", ACM Transactions on Graphics (Proc. SIGGRAPH ASIA, Vol. 31(6), 187:1-187:11, 2012 proposes tracking points at each frame of consecutive frames with respect to a template mesh that is initialized at a first frame, as described in conjunction with Figure 2 of Levi Valgaerts et al. However, a template-based approach lacks robustness in that it is difficult to capture the real-world object or scene by the camera so that the orientation of the object or scene in the captured image (or the camera's field of view) matches the orientation of the object or scene in the template.

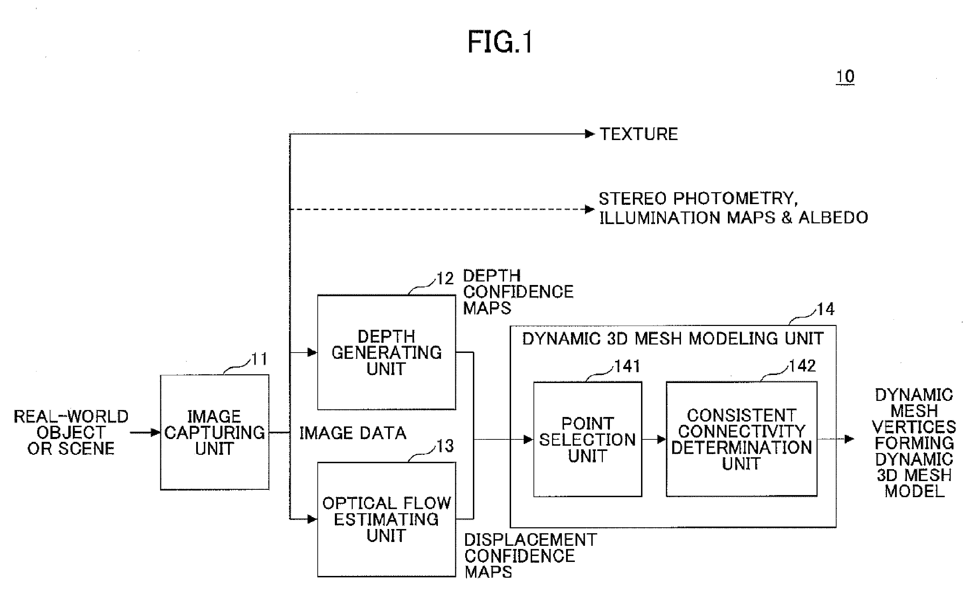

On the other hand, Hao Li, et al., "Realtime Facial Animation with On-the-fly Correctives", ACM Transactions on Graphics, Proceedings of the 40th ACM SIGGGRAPH Conference and Exhibition 2013, 07/2013, and "http://msdn.microsoft.com/en-us/library/jj130970.aspx #ID4EDLAE" (SDK link), for example, propose relying on sparse feature points for coarser initializations, as described in conjunction with Figure 1 of Hao Li, et al. and as described in conjunction with Figure 2 and AUs (Animation Units) of the SDK link. However, feature-point based approaches do not provide a sufficiently large number of points for enabling accurate 3D modeling, and it is difficult to generate a high-resolution 3D model.

SUMMARY

According to an aspect of the present disclosure, a method may include generating depth confidence maps and displacement confidence maps from dynamic image data including depth information; computing spatio-temporal reliability criteria for depth and displacement confidences, for pixels of a scene object in each of sequential frames of the dynamic image data, based on the depth confidence maps and the displacement confidence maps; and selecting a set of 3D points for forming a 3D model, having a spatio-temporal reliability criterion higher than a threshold for the spatio-temporal reliability criteria.

According to another aspect of the present disclosure, an apparatus may include a generating unit configured to generate depth confidence maps and displacement confidence maps from dynamic image data including depth information; a computing unit configured to compute spatio-temporal reliability criteria for depth and displacement confidences, for pixels of a scene object in each of sequential frames of the dynamic image data, based on the depth confidence maps and the displacement confidence maps; and a selection unit configured to select a set of 3D points for forming a 3D model, having a spatio-temporal reliability criterion higher than a threshold for the spatio-temporal reliability criteria.

According to still another aspect of the present disclosure, a computer-readable storage medium having stored therein a program which, when executed by a computer, may cause the computer to perform a process that includes generating depth confidence maps and displacement confidence maps from dynamic image data including depth information; computing spatio-temporal reliability criteria for depth and displacement confidences, for pixels of a scene object in each of sequential frames of the dynamic image data, based on the depth confidence maps and the displacement confidence maps; and selecting a set of 3D points for forming a 3D model, having a spatio-temporal reliability criterion higher than a threshold for the spatio-temporal reliability criteria.

The object and advantages of the present disclosure will be realized and attained by means of the elements and combinations particularly pointed out in the claims.

It is to be understood that both the foregoing general description and the following detailed description are exemplary and explanatory and are not restrictive of the invention, as claimed.

BRIEF DESCRIPTION OF THE DRAWINGS

FIG. 1 is a block diagram illustrating an example of an apparatus according to an embodiment of the present invention;

FIG. 2 is a block diagram illustrating a part of the apparatus illustrated in FIG. 1;

FIGs. 3A, 3B, and 3C are diagrams illustrating examples of a color frame, a corresponding estimated depth map, and a corresponding estimation confidence map;

FIGs. 4A and 4B are diagrams illustrating examples of a measured depth map and a corresponding confidence map;

FIG. 5 is a diagram illustrating a process of determining pixel trajectories from backward and forward optical flows;

FIG. 6 is block diagram illustrating an example of a hardware configuration of a computer; and

FIG. 7 is a flow chart illustrating an example of a process performed by the apparatus.

DESCRIPTION OF EMBODIMENTS

Embodiments of the present invention will be described with reference to the accompanying drawings.

A description will now be given of a method, an apparatus, and a computer-readable storage medium, in each embodiment according to the present invention.

FIG. 1 is a block diagram illustrating an example of the apparatus according to an embodiment of the present invention. A 3D modeling apparatus 10 illustrated in FIG. 1 includes an image capturing unit 11, a depth generating unit 12, an optical flow estimating unit 13, and a dynamic 3D mesh modeling unit 14. However, the image capturing unit 11 may be provided as an external apparatus that is externally connectable to the 3D modeling apparatus 10.

The image capturing unit 11 captures a real-world object or scene, and outputs dynamic image data including depth information. The dynamic image data may include a plurality of sequential color frames together with corresponding depth information for each frame. The depth information indicates a distance of surfaces of scene objects (that is, objects within the scene) from a viewpoint of the image capturing unit 11. The image capturing unit 11 may be formed by a stereo video camera, a ToF (Time-of-Flight) camera, a structured light 3D scanning device, or any suitable known means or unit capable of capturing a dynamic image together with the depth information.

For example, the dynamic image data output from the image capturing unit 11 may be used to extract texture of scene objects, to estimate surface normals of scene objects observed under different lighting conditions by photometric stereo, to obtain illumination map or albedo of scene objects, or the like.

The depth generating unit 12 generates depth maps and depth confidence maps for each frame, based on the dynamic image data and the depth information output from the image capturing unit 11. The depth confidence maps are supplied to the dynamic 3D mesh modeling unit 14.

The optical flow estimating unit 13 estimates an optical flow of the scene object, and generates displacement maps and displacement confidence maps for each frame, based on the dynamic image data output from the image capturing unit 11. As is well known in the art, the optical flow describes the motion of a point on the scene object by a vector. The displacement confidence maps are supplied to the dynamic 3D mesh modeling unit 14.

The depth generating unit 12 and the optical flow estimating unit 13 may form a single generating unit to generate the depth confidence map and the displacement confidence map.

The dynamic 3D mesh modeling unit 14 includes a point selection unit 141 and a consistent connectivity determination unit 142. The point selection unit 141 makes a reliable selection of 3D points, that is, dynamic mesh vertices, from a set of 3D points for dynamic 3D modeling of the scene object with a high accuracy and a high resolution, based on the depth confidence maps and the displacement confidence maps. The point selection unit 141 will be described later in more detail in conjunction with FIG. 2.

The consistent connectivity determination unit 142 determines a consistent connectivity of the 3D points selected by the point selection unit 141, in order to add the consistent connectivity to the selected dynamic mesh vertices forming a dynamic 3D mesh model. The consistent connectivity of one 3D point in a given frame indicates that a corresponding 3D point exists in a previous frame which occurred before the given frame in time and in a next frame which occurs after the given frame in time. By adding the consistent connectivity to the selected dynamic mesh vertices forming the dynamic 3D mesh model, it is possible to define the mesh vertices to which each mesh vertex is connected and thus define faces or polygons (for example, triangles, quadrangles, or the like), in order to form the raw set of mesh vertices (or 3D points) into the dynamic 3D mesh model.

Hence, the output of the consistent connectivity determination unit 142 may be used to build the dynamic 3D mesh model in which the occurrence of each mesh is consistent amongst successive frames. The consistent connectivity is required in a case in which the meshes are to be processed to provide temporally smooth visual effects, for example. If the meshes were not consistent amongst the successive frames, temporal artifacts would occur. The 3D dynamic meshes of the dynamic 3D mesh model, added with the consistent connectivity, may be used at a latter stage of the dynamic 3D mesh modeling unit 14, for statistical modeling, for example.

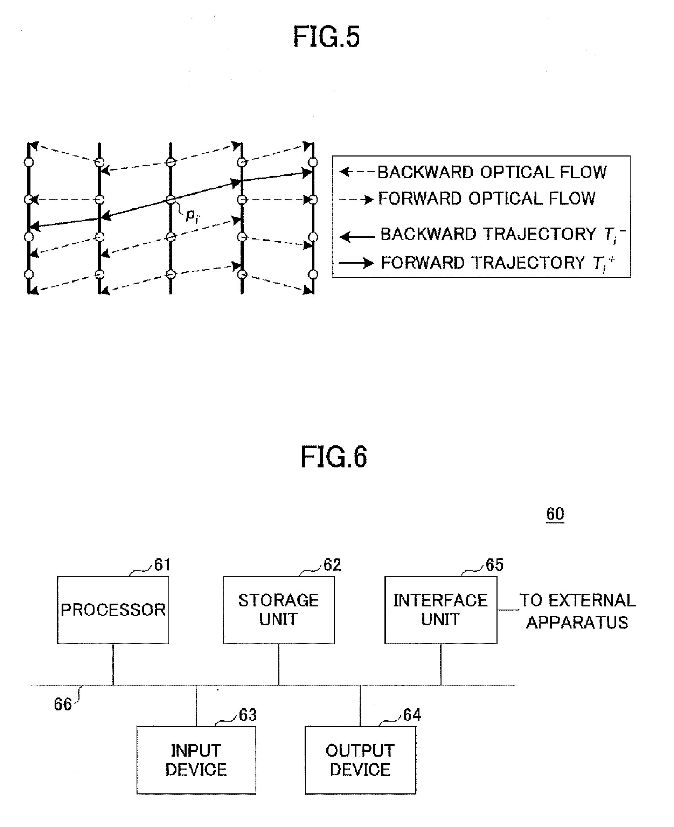

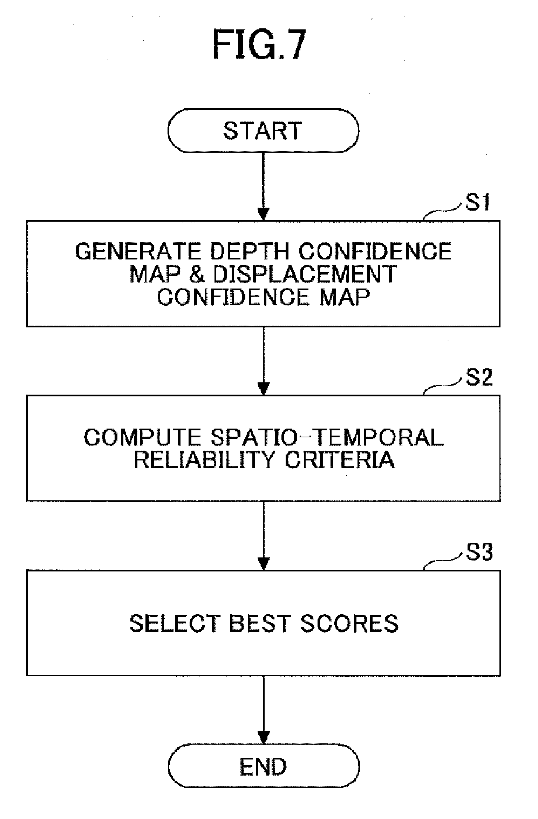

Each of the depth generating unit 12, the optical flow estimating unit 13, and the dynamic 3D mesh modeling unit 14 may be formed by dedicated hardware. Alternatively, the functions of at least one of the depth generating unit 12, the optical flow estimating unit 13, and the dynamic 3D mesh modeling unit 14 may be performed by a computer, as will be described later in conjunction with FIGs. 6 and 7.

FIG. 2 is a block diagram illustrating a part of the 3D modeling apparatus illustrated in FIG. 1. In FIG. 2, a spatio-temporal reliability computing unit 1411 and a best score selection unit 1412 form the point selection unit 141 illustrated in FIG. 1. The spatio-temporal reliability computing unit 1411 receives the depth confidence maps from the depth generating unit 12, the displacement maps and the displacement confidence maps from the optical flow estimating unit 13, and a spatio-temporal tradeoff weight. The best score selection unit 1412 receives an output of the spatio-temporal reliability computation unit 1411, and a user-specified threshold.

Next, a description will be given of the depth maps and the depth confidence maps generated by the depth generating unit 12.

The depth maps may be inter-view disparity maps. In this case, the depth generating unit 12 may function as a depth estimating unit. An inter-view disparity d, in pixels, can be represented by the following formula (1), where b denotes an inter-axial distance (in meters) of a camera rig, f denotes a focal length (in pixels) of the stereo video camera forming the image capturing unit 11, and z denotes a depth (in meters) of the scene object. The inter-axial distance of the camera rig may correspond to a distance between optical axes of the stereo video camera mounted on the camera rig.

$$d = (b \cdot f) / z \qquad \qquad \text{---} \quad (1)$$

The inter-view disparity maps can be delivered in a format represented by a scaling operation dedicated to transmission, for example. In the case of a depth estimation process, a normalized disparity D1 on n bits being targeted can be represented by the following formula (2), where n = 8, 12, or 16, for example, $d_{min}$ denotes a minimum disparity, and $d_{max}$ denotes a maximum disparity. As an example, D1 = 0 when d = $d_{min}$, and D1 = $2^n$ - 1 when d = $d_{max}$. When n = 8, for example, D1 = $2^n$ - 1 = 255.

$$D1 = (2^n - 1)\{(d - d_{min}) / (d_{max} - d_{min})\} \qquad \text{---} \quad (2)$$

The depth maps can also be delivered by a ToF camera or a structured light 3D scanning device, such as the PrimeSense (registered trademark) Kinect (registered trademark) device, forming the image capturing unit 11. In other words, a normalized depth D2 can be expressed as a function of the depth z of the scene object and be represented by the following formula (3), where A and B denote calibration parameters, represented by the formulas (4) and (5), that convert the depth, in meters, into an integer than fits on 10 bits, for example. In this case, the depth generating unit 12 may function as a depth measuring unit. In the formulas (4) and (5), $z_{near}$ and $z_{far}$ denote a near DoF (Depth of Field) and a far DoF, respectively.

$$D2 = (A/z) \cdot B \qquad \qquad \text{---} \quad (3)$$

$$A = (2^n - 1)\{(z_{near} \cdot z_{far}) / (z_{far} - z_{near})\} \qquad \text{---} \quad (4)$$

$$B = -(2^n - 1)\{z_{near} / (z_{far} - z_{near})\} \qquad \text{---} \quad (5)$$

In the formulas (3) through (5) described above, A ≈ -361 and B ≈ 1095, for example. A value beyond the measurable range of the normalized depth D2 (D2 = 2047 (0x7FF)) may be reserved for holes for which no depth is available.

Next, a description will be given of the depth confidence maps. In the case in which the depth generating unit 12 functions as the depth estimating unit that estimates the inter-view disparity, the depth confidence maps may be computed during the depth estimation process. An example of a depth confidence may be expressed as a function of energy minimized, by a reliability criterion $R_z$ represented by the following formula (6), for example, where $min_1E$ and $min_3E$ denote a lowest energy and third lowest energy, respectively.

$$R_z = (min_3E - min_1E)/min_3E \qquad --- (6)$$

Of course, reliability criteria other than the reliability criterion $R_z$ described above may be used for the depth confidence maps. Examples of the reliability criteria other than the reliability criterion $R_z$ include confidence values proposed in Xiaoyan Hu, et al., "A Quantitative Evaluation of Confidence Measures for Stereo Vision", IEEE Transactions on Pattern Analysis And Machine Intelligence, 2012, for example.

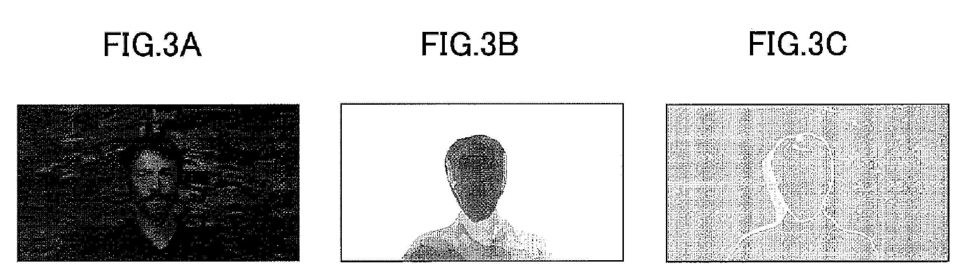

FIGs. 3A, 3B, and 3C are diagrams illustrating examples of a color frame, a corresponding estimated depth map, and a corresponding estimated confidence map. In FIG. 3B, the darker the tone of the image, the closer the scene object is to the stereo video camera. In FIG. 3C, the darker the tone of the image, the higher the depth confidence is in the depth confidence map.

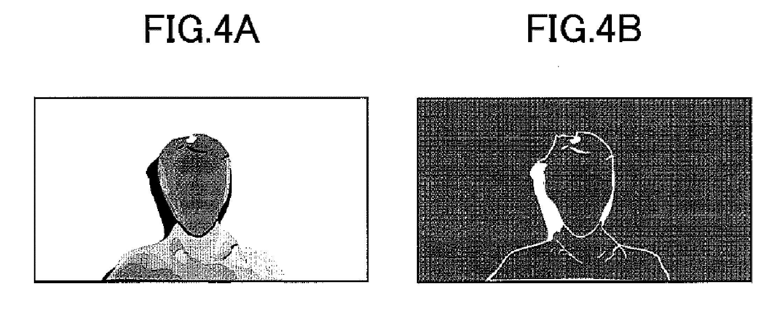

On the other hand, in the case in which the depth generating unit 12 functions as the depth measuring unit that measures the depth, the depth confidence maps may be generated together with the depth information, or computed during a depth measuring process. For example, the depth confidence maps may be generated based on a signal indicating a light intensity, from the ToF camera forming the image capturing unit 11. Thus, in the case of the PrimeSense (registered trademark) Kinect (registered trademark) device forming the image capturing unit 11, binary confidence maps can be straightforwardly derived from depth maps holes, as illustrated in FIGs. 4A and 4B, for example. FIGs. 4A and 4B are diagrams illustrating examples of a measured depth map and a corresponding measured confidence map. In FIG. 4A, the darker the tone of the image, the closer the scene object is to the stereo video camera, and black areas represent holes. In FIG. 4B, the darker the tone of the image, the higher the depth confidence is in the depth confidence map.

Next, a description will be given of the displacement maps and the displacement confidence maps.

When pixel coordinates within a frame of the sequential color frames are denoted by (u, v), a dense optical flow (du, dv) is required for each of the sequential color frames in order to determine trajectories of pixels along which reliability criteria are temporally integrated. An inter-frame optical flow estimation may be similar to the inter-view disparity estimation described above. Hence, the displacement maps may be inter-frame disparity maps.

An example of the displacement reliability (or motion reliability) $R_m$ for a displacement confidence of the displacement confidence map can be computed during the optical flow estimation, in a manner similar to computing the reliability criterion $R_z$ for the depth confidence of the depth confidence map during the depth estimation process.

Next, a description will be given of a spatio-temporal reliability criteria computed by the spatio-temporal reliability computing unit 1411. In the following description, it is assumed for the sake of convenience that the reliability criteria $R_z$ and $R_m$ for the depth confidence and the displacement (or motion) confidence, respectively, are positive and normalized, such that the following relationships are satisfied.

$$\begin{cases} 0 \leq R_z \leq 1 \\ 0 \leq R_m \leq 1 \end{cases}$$

FIG. 5 is a diagram illustrating a process of determining pixel trajectories from backward and forward optical flows. In FIG. 5, circular marks denote pixels, and considering a given pixel $p_i$ in a given frame, a trajectory of this pixel $p_i$ along the plurality of sequential color frames (hereinafter also referred to as "a sequence of the frames") is denoted by $T_i$. In addition, in FIG. 5, a dotted line arrow pointing to the left indicates a backward optical flow, a dotted line arrow pointing to the right indicates a forward optical flow, a bold arrow pointing to the left indicates a backward sub-trajectory $T_i^-$ of a backward part of the trajectory $T_i$, and a bold arrow pointing to the right indicates a forward sub-trajectory $T_i^+$ of a forward part of the trajectory $T_i$. Bilinear interpolation may be performed in order to determine displacements at sub-pixel locations in FIG. 5.

For example, an average spatio-temporal reliability (or confidence) $m_i$ can be computed from the following

formula (7), where $\alpha$ denotes the user-specified spatio-temporal tradeoff weight satisfying a relationship $0 \leq \alpha \leq 1$. A bilinear interpolation may also be performed in order to determine the reliability criteria $R_m$ and $R_z$ at the sub-pixel locations.

$$m_i = \int_{p \in T_i} \alpha \cdot R_z(p) + (1 - \alpha) \cdot R_m(p)$$

$$= \int_{p \in T_i^-} \alpha \cdot R_z(p) + (1 - \alpha) \cdot R_m^-(p) + \int_{p \in T_i^+} \alpha \cdot R_z(p) + (1 - \alpha) \cdot R_m^+(p)$$

$$--- \quad (7)$$

In order to provide robustness to the depth and displacement (or motion) outliers, a spatio-temporal reliability (or confidence) variance $var_i$ along the trajectory $T_i$ may be computed.

The spatial-temporal reliability computing unit 1411 illustrated in FIG. 2 computes a score S of each pixel $p_i$ from the following formula (8), where $\Omega$ denotes a shape of the scene object in a set of key-frames selected by a user. The score S indicates a value that depends on the spatio-temporal reliability criterion and the user-specified spatio-temporal tradeoff weight $\alpha$, and in this example, the score S indicates the value that depends on the average spatio-temporal reliability $m_i$ and the spatio-temporal reliability variance $var_i$. The set of key-frames may include an arbitrary frame at an intermediate part (for example, middle) of the sequence of the frame, or first and last frames of the sequence of the frames, or particular frames of the sequence of the frames to circumvent potential partial occlusions, for example.

$$S = \{m_i - var_i\}_{i \in \Omega} \qquad --- \quad (8)$$

The best score selection unit 1412 illustrated in FIG. 2 receives the scores S output from the spatio-temporal reliability computing unit 1411, and selects a best score $S_b$ for each pixel $p_i$ in the set of the key-frames, based on the user-specified threshold, in order to output a set of reliable 3D points with the best scores $S_b$ higher than a score indicated by the user-specified threshold. The set of reliable 3D points output from the best score selection unit 1412 is supplied to the consistent connectivity determination unit 142 illustrated in FIG. 1.

FIG. 6 is block diagram illustrating an example of a hardware configuration of a computer. A computer 60 illustrated in FIG. 6 includes a processor 61, such as a CPU (Central Processing Unit), a storage unit 62, an input device 63, and an output device 64, and an interface unit 65 which are connected by a bus 66. Of course, constituent elements of the computer 60 may be connected by a connection other than a bus connection using the bus 66.

The processor 61 controls operations of the computer 60. The storage unit 62 stores at least one program to be executed by the processor 61, and various data, including the dynamic image data received from the image capturing unit 11, parameters used by computations performed by the processor 61, intermediate data of computations performed by the processor 61, the 3D dynamic meshes of the dynamic 3D mesh model, added with the consistent connectivity, to be used for statistical modeling, for example, or the like.

The storage unit 62 may be formed by any suitable storage or means capable of storing the program, data, or the like in a computer-readable manner. Examples of the storage unit 62 include non-transitory computer-readable storage media such as semiconductor memory devices, and magnetic, optical, or magneto-optical recording media loaded into a read and write unit.

The program causes the processor 61 to perform a process of at least one of the depth generating unit 12, the optical flow estimating unit 13, and the dynamic 3D mesh modeling unit 14, in order to cause the computer 60 to perform the function of at least one of the depth generating unit 12, the optical flow estimating unit 13, and the dynamic 3D mesh modeling unit 14 illustrated in FIG. 1. In other words, the program may cause software modules of the computer 60 to function as the 3D modeling apparatus 10, in response to the dynamic image data including the depth information, received from the image capturing unit 11.

The input device 63 may be formed by a keyboard or the like for use by the user to input commands, to make user's selections, to specify thresholds and parameters, or the like with respect to the computer 60. The output device 64 may be formed by a display device to display messages or the like to the user, outputs of the computer such as the dynamic 3D mesh model, or the like. The input device 63 and the output device 64 may be formed integrally by a touchscreen panel, for example. The interface unit 65 provides an interface between the computer 60 and an external apparatus, such as the image capture unit 11 illustrated in FIG. 1. The interface unit 65 may be communicable with the external apparatus via cable or wireless communication.

FIG. 7 is a flow chart illustrating an example of a process performed by the apparatus. In this example, it is assumed for the sake of convenience that the processor 61 forming the computer 60 illustrated in FIG. 6 executes the program stored in the storage unit 62 to perform the processes of the depth generating unit 12, the optical flow estimating unit 13, and the dynamic 3D mesh modeling unit 14 illustrated in FIG. 1.

In FIG. 7, the processor 61, in step S1, generates the depth confidence maps from the image data including the depth information received from the image capturing unit 11 during a depth estimation process that generates the depth maps, and generates the displacement confidence maps from the dynamic image data including the depth information received from the image capturing unit 11 during an optical flow estimation process that generates the displacement confidence maps. The process of step S1 may correspond to the processes of the depth generating unit 12 and the optical flow estimating unit 13 illustrated in FIG. 2.

The processor 61, in step S2, computes the spatio-temporal reliability criteria for depth and displacement confidences, for pixels of a scene object in each of sequential frames of the dynamic image data, based on the depth confidence maps and the displacement confidence maps.

The processor 61, in step S3 selects a set of 3D points for forming a 3D model, having a spatio-temporal reliability criterion higher than a threshold for the spatio-temporal reliability criteria. The process ends after step S3.

In step S2, the processor 61 may compute scores S that depend on the spatio-temporal reliability criteria for the depth and the displacement (or motion) confidences, for pixels of the scene object in each of the sequential color frames of the dynamic image data, based on the depth confidence maps, the displacement confidence maps, and the spatio-temporal tradeoff weight $\alpha$, and output the score with the pixels. In this case, in step S3, the processor 61 may select the best score $S_b$ for each pixel $p_i$ in the set of the key-frames, from amongst the scores S output in step S2, based on a user-specified threshold for the scores, in order to output a set of reliable 3D points with the best score $S_b$ higher than a score indicated by the user-specified threshold for the scores. In other words, the process of step S2 may correspond to the process of the spatio-temporal reliability computing unit 1411 illustrated in FIG. 2, and the process of step S3 may correspond to the process of the best score selection unit 1412 illustrated in FIG. 2.

In the embodiment described above, the depth generating unit 12 generates the depth maps because the depth generating unit 12 may generate the depth confidence maps during the process that generates the depth maps, and the optical flow estimating unit 13 generates the displacement maps because the optical flow estimating unit 13 may generate the displacement confidence maps during the process that generates the displacement maps. However, the depth generating unit 12 may omit generating the depth maps and the optical flow estimating unit 13 may omit generating the displacement maps in a case in which the depth maps and the displacement maps are unnecessary for the process to be performed in the 3D modeling apparatus 10, or the depth maps and the displacement maps are unnecessary for generating the depth confidence maps and the displacement confidence maps.

The depth maps and the depth confidence maps may be generated by any suitable known methods other than those described above. Similarly, the displacement maps and the displacement confidence maps may be generated by any suitable known methods other than those described above.

The embodiment described above may be applied to dynamic 3D mesh modeling in visual effects (VFX) of cinema production, consumers solutions (for example, face editing or enhancement application software on mobile terminals), or the like. The embodiment may also be suited for GPGPU (General-Purpose computing on Graphics Processing Units) programming, parallelized with grids corresponding to Q-points.

According to the embodiment described above, the 3D modeling of the object or scene can be achieved with a high accuracy and a high resolution, when compared to conventional methods.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention.

**Claims**

1. A method, including:

      generating (S1) depth confidence maps and displacement confidence maps from dynamic image data including depth information;
      computing (S2) spatio-temporal reliability criteria for depth and displacement confidences, for pixels of a scene object in each of sequential frames of the dynamic image data, based on the depth confidence maps and the displacement confidence maps; and

selecting (S3) a set of 3D points for forming a 3D model, having a spatio-temporal reliability criterion higher than a threshold for the spatio-temporal reliability criteria.

2. The method as claimed in claim 1,
wherein the computing (S2) computes scores that depend on the spatio-temporal reliability criteria for the depth and displacement confidences, for each pixel of the scene object in each of the sequential frames of the dynamic image data, based on the depth confidence maps, the displacement maps, the displacement confidence maps, and a spatio-temporal tradeoff weight, and outputs the scores with the pixels; and
wherein the selecting (S3) selects a best score for each pixel in a set of key-frames, from amongst the scores output by the computing, based on a user-specified threshold for the scores, in order to output a set of 3D points with the best score higher than a score indicated by the user-specified threshold for the scores.

3. The method as claimed in claim 1 or 2, wherein the generating (S1) includes:

generating the depth confidence maps from inter-view disparity maps generated during a depth estimation process based on the depth information received from a stereo video camera, and
generating the displacement confidence maps during an optical flow estimation process.

4. The method as claimed in claim 1 or 2, wherein the generating (S1) includes:

generating the depth confidence maps during a depth measuring process based on the depth information received from a ToF (Time-of-Flight) camera or a structured light 3D scanning device, and
generating the displacement confidence maps during an optical flow estimation process.

5. The method as claimed in any of claims 1 to 4, wherein the method further including:

determining a consistent connectivity of the set of 3D points selected by the selecting, in order to add the consistent connectivity to dynamic mesh vertices forming a dynamic 3D mesh model.

6. An apparatus, comprising:

a generating unit (12, 13; 61) configured to generate depth confidence maps and displacement confidence maps from dynamic image data including depth information;
a computing unit (14, 1411; 61) configured to compute spatio-temporal reliability criteria for depth and displacement confidences, for pixels of a scene object in each of sequential frames of the dynamic image data, based on the depth confidence maps and the displacement confidence maps; and
a selection unit (14, 1412; 61) configured to select a set of 3D points for forming a 3D model, having a spatio-temporal reliability criterion higher than a threshold for the spatio-temporal reliability criteria.

7. The apparatus as claimed in claim 6,
wherein the computing unit (14, 1411; 61) computes scores that depend on the spatio-temporal reliability criteria for the depth and displacement confidences, for each pixel of the scene object in each of the sequential frames of the dynamic image data, based on the depth confidence maps, the displacement maps, the displacement confidence maps, and a spatio-temporal tradeoff weight, and outputs the scores with the pixels; and
wherein the selecting unit (14, 1412; 61) selects a best score for each pixel in a set of key-frames, from amongst the scores output by the computing, based on a user-specified threshold for the scores, in order to output a set of 3D points with the best score higher than a score indicated by the user-specified threshold for the scores.

8. The apparatus as claimed in claim 6 or 7, wherein the generating unit (12, 13; 61) is configured to:

generate the depth confidence maps from inter-view disparity maps generated during a depth estimation process based on the depth information received from a stereo video camera, and
generate the displacement confidence maps during an optical flow estimation process.

9. The apparatus as claimed in claim 6 or 7, wherein the generating unit (12, 13; 61) is configured to:

generate the depth confidence maps during a depth measuring process based on the depth information received from a ToF (Time-of-Flight) camera or a structured light 3D scanning device, and
generate the displacement confidence maps during an optical flow estimation process.

10. The apparatus as claimed in any of claims 6 to 9, wherein the apparatus further comprising:

a determination unit (14, 14; 61) configured to determine a consistent connectivity of the set of 3D points selected by the selecting, in order to add the consistent connectivity to dynamic mesh vertices forming a dynamic 3D mesh model.

11. A computer-readable storage medium having stored therein a program which, when executed by a computer (61), causes the computer to perform a process including:

generating (S1) depth confidence maps and displacement confidence maps from dynamic image data including depth information;
computing (S2) spatio-temporal reliability criteria for depth and displacement confidences, for pixels of a scene object in each of sequential frames of the dynamic image data, based on the depth confidence maps and the displacement confidence maps; and
selecting (S3) a set of 3D points for forming a 3D model, having a spatio-temporal reliability criterion higher than a threshold for the spatio-temporal reliability criteria.

12. The computer-readable storage medium as claimed in claim 11,
wherein the computing (S2) computes scores that depend on the spatio-temporal reliability criteria for the depth and displacement confidences, for each pixel of the scene object in each of the sequential frames of the dynamic image data, based on the depth confidence maps, the displacement maps, the displacement confidence maps, and a spatio-temporal tradeoff weight, and outputs the scores with the pixels; and
wherein the selecting (S3) selects a best score for each pixel in a set of key-frames, from amongst the scores output by the computing, based on a user-specified threshold for the scores, in order to output a set of 3D points with the best score higher than a score indicated by the user-specified threshold for the scores.

13. The computer-readable storage medium as claimed in claim 11 or 12, wherein the generating (S1) includes:

generating the depth confidence maps from inter-view disparity maps generated during a depth estimation process based on the depth information received from a stereo video camera, and
generating the displacement confidence maps during an optical flow estimation process.

14. The computer-readable storage medium as claimed in claim 11 or 12, wherein the generating (S1) includes:

generating the depth confidence maps during a depth measuring process based on the depth information received from a ToF (Time-of-Flight) camera or a structured light 3D scanning device, and
generating the displacement confidence maps during an optical flow estimation process.

15. The computer-readable storage medium as claimed in any of claims 11 to 14, wherein the process further including:

determining a consistent connectivity of the set of 3D points selected by the selecting, in order to add the consistent connectivity to dynamic mesh vertices forming a dynamic 3D mesh model.

# FIG.1

# FIG.2

EP 2 947 625 A1

FIG.3A    FIG.3B    FIG.3C

FIG.4A

FIG.4B

# FIG.5

- ◄--  BACKWARD OPTICAL FLOW
- --►  FORWARD OPTICAL FLOW
- ◄—  BACKWARD TRAJECTORY $T_i^-$
- —►  FORWARD TRAJECTORY $T_i^+$

# FIG.6

60

| PROCESSOR (61) | STORAGE UNIT (62) | INTERFACE UNIT (65) — TO EXTERNAL APPARATUS |

66

| INPUT DEVICE (63) | OUTPUT DEVICE (64) |

# FIG.7

START

S1

GENERATE DEPTH CONFIDENCE
MAP & DISPLACEMENT
CONFIDENCE MAP

S2

COMPUTE SPATIO-TEMPORAL
RELIABILITY CRITERIA

S3

SELECT BEST SCORES

END

Europäisches
Patentamt

European
Patent Office

Office européen
des brevets

# EUROPEAN SEARCH REPORT

Application Number

EP 14 30 5747

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KEVIN KARSCH ET AL: "Depth Extraction from Video Using Non-parametric Sampling", 7 October 2012 (2012-10-07), COMPUTER VISION ECCV 2012, SPRINGER BERLIN HEIDELBERG, BERLIN, HEIDELBERG, PAGE(S) 775 - 788, XP047019065, ISBN: 978-3-642-33714-7 * abstract, sections 2-5, Figs. 1-14 * | 1-15 | INV. G06T7/00 G06T7/20 G06K9/00 |
| X | STRECHA C ET AL: "Motion-Stereo Integration for Depth Estimation", COMPUTER VISION - ECCV 2002 : 7TH EUROPEAN CONFERENCE ON COMPUTER VISION, COPENHAGEN, DENMARK, MAY 28 - 31, 2002; PROCEEDINGS; [LECTURE NOTES IN COMPUTER SCIENCE], BERLIN [U.A.] : SPRINGER, DE, vol. 2351, 28 May 2002 (2002-05-28), pages 170-185, XP002581504, DOI: 10.1007/3-540-47967-8 ISBN: 978-3-540-43744-4 * abstract, Figs. 1-8, sections 3-5 * | 1-15 | |
| X | CHENG LEI ET AL: "A new multiview spacetime-consistent depth recovery framework for free viewpoint video rendering", COMPUTER VISION, 2009 IEEE 12TH INTERNATIONAL CONFERENCE ON, IEEE, PISCATAWAY, NJ, USA, 29 September 2009 (2009-09-29), pages 1570-1577, XP031672687, ISBN: 978-1-4244-4420-5 * abstract, sections 3-5, Figs. 1-5 * * | 1-15 | TECHNICAL FIELDS SEARCHED (IPC) G06T H04N G06K |

-/--

The present search report has been drawn up for all claims

| Place of search | Date of completion of the search | Examiner |
|---|---|---|
| Munich | 11 February 2015 | Borotschnig, Hermann |

Europäisches
Patentamt

European
Patent Office

Office européen
des brevets

## EUROPEAN SEARCH REPORT

Application Number

EP 14 30 5747

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG CHENXI ET AL: "High-Quality Stereo Video Matching via User Interaction and Space-Time Propagation", 2013 INTERNATIONAL CONFERENCE ON 3D VISION, IEEE, 29 June 2013 (2013-06-29), pages 71-78, XP032480458, DOI: 10.1109/3DV.2013.18 [retrieved on 2013-09-13] * abstract, sections 3, 5-6, Figs. 1-6 * * | 1-15 | |
| Y | POLLEFEYS M ET AL: "Detailed Real-Time Urban 3D Reconstruction from Video", INTERNATIONAL JOURNAL OF COMPUTER VISION, KLUWER ACADEMIC PUBLISHERS, BO, vol. 78, no. 2-3, 20 October 2007 (2007-10-20), pages 143-167, XP019581883, ISSN: 1573-1405 * abstract, sections 6.5, 7.3 * | 1-15 | |
| Y | Gerda Kamberova ET AL: "Precision in 3-D Points Reconstructed from Stereo Recommended Citation", Technical Reports (CIS). Paper 201, 1 January 1997 (1997-01-01), pages 1-15, XP055167571, Retrieved from the Internet: URL:http://repository.upenn.edu/cgi/viewcontent.cgi?article=1208&context=cis_reports [retrieved on 2015-02-05] * abstract, sections 4-5 * | 1-15 | **TECHNICAL FIELDS SEARCHED (IPC)** |

The present search report has been drawn up for all claims

| Place of search | Date of completion of the search | Examiner |
|---|---|---|
| Munich | 11 February 2015 | Borotschnig, Hermann |

EPO FORM 1503 03.82 (P04C01)

EP 2 947 625 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Lightweight Binocular Facial Performance Capture under Uncontrolled Lighting. **LEVI VALGAERTS et al.** Proc. SIGGRAPH ASIA. ACM Transactions on Graphics, 2012, vol. 31
- Realtime Facial Animation with On-the-fly Correctives. **HAO LI et al.** Proceedings of the 40th ACM SIGGGRAPH Conference and Exhibition 2013. ACM Transactions on Graphics, July 2013
- **XIAOYAN HU et al.** A Quantitative Evaluation of Confidence Measures for Stereo Vision. *IEEE Transactions on Pattern Analysis And Machine Intelligence,* 2012